# EUROPEAN PATENT APPLICATION

(11) **EP 4 243 135 A1**
(43) Date of publication of application: **13.09.2023**
(21) Application number: 22848109.9
(22) Date of filing: 17.06.2022
(51) Int. Cl.: H01M 10/04, H01M 10/0587, H01M 10/0525

(54) **WINDING NEEDLE SLEEVE, BATTERY CELL, BATTERY, POWER CONSUMING DEVICE AND WINDING DEVICE**

(30) Priority: 30.07.2021 CN 202121772542 U
(71) Applicant: Contemporary Amperex Technology Co., Limited, Ningde, Fujian 352100 (CN)
(72) Inventor: ZHANG, Xiaowei, Ningde, Fujian 352100 (CN); ZHANG, Wei, Ningde, Fujian 352100 (CN); WEN, Yuqian, Ningde, Fujian 352100 (CN); TANG, Minghao, Ningde, Fujian 352100 (CN); WU, Zhiyang, Ningde, Fujian 352100 (CN); BAI, Qinglin, Ningde, Fujian 352100 (CN)
(74) Representative: Holt, Lucy Rose
(86) International application number: PCT/CN2022/099570
(87) International publication number: WO 2023/005502

(57) **Abstract**

The present application discloses a winding needle sleeve, a battery unit, a battery, a power consuming device and a winding device. A wall of the winding needle sleeve is provided with a through slot extending through the wall, the through slot extends from one end to the other end of the winding needle sleeve so as to allow expansion or contraction of the winding needle sleeve in a radial direction. The technical solution provided by the present application can solve the problem in the prior art that an electrode assembly collapses due to expansion and contraction thereof, resulting in wrinkling of a surface of the electrode assembly and the phenomenon of lithium deposition, thus causing potential safety hazards.

## Description

### Cross-Reference to Related Applications

The present application claims the priority of Chinese patent application no. 202121772542.2, entitled "WINDING NEEDLE SLEEVE, BATTERY UNIT, BATTERY, POWER CONSUMING DEVICE, AND WINDING DEVICE" and filed on July 30, 2021, the entire content of which is incorporated herein by reference.

### Technical Field

The present application relates to the technical field of battery manufacturing, and in particular to a winding needle sleeve, a battery unit, a battery, a power consuming device, and a winding device.

### Background Art

A battery unit includes an electrode assembly, the electrode assembly is formed by winding an electrode plate and a separator stacked to each other around a sleeve by means of a winding device, and the sleeve is retained in a central hole of the electrode assembly.

During the charging and discharging of the battery unit, the electrode assembly expands and contracts so as to compress the sleeve in a radial direction, and insufficient supporting strength of the sleeve for the central hole of the electrode assembly may lead to the collapse of the electrode assembly, resulting in wrinkling of the surface of the electrode assembly and the phenomenon of lithium deposition, thus causing potential safety hazards.

### Summary of the Invention

The present application provides a winding needle sleeve, a battery unit, a battery, a power consuming device and a winding device, which can solve the problem in the prior art that an electrode assembly collapses due to expansion and contraction thereof, resulting in wrinkling of a surface of the electrode assembly and the phenomenon of lithium deposition, thus causing potential safety hazards.

In a first aspect, the present application provides a winding needle sleeve, a wall of the winding needle sleeve being provided with a through slot extending through the wall, and the through slot extending from one end to the other end of the winding needle sleeve so as to allow expansion or contraction of the winding needle sleeve in a radial direction.

In the above-mentioned implementation process, the through slot allows the expansion or contraction of the winding needle sleeve in the radial direction, so the winding needle sleeve has the characteristic of elastic deformation in the radial direction, and a clearance formed by the through slot can indirectly reflect the deformation quantity of the winding needle sleeve in the radial direction. When retained in a central hole of the electrode assembly, the winding needle sleeve is elastically fitted with the electrode assembly to elastically support the electrode assembly. When the electrode assembly expands and contracts due to the charging and discharging of the battery unit, the winding needle sleeve can effectively support the central hole of the electrode assembly, solving the problem of collapse caused by insufficient supporting strength for the central hole of the electrode assembly. Specifically, when the winding needle sleeve is compressed during the expansion and contraction of the electrode assembly, the winding needle sleeve restrains the deformation of the electrode assembly due to its elasticity and thus supports the electrode assembly all the time, so that the surface of the electrode assembly does not wrinkle due to the expansion and contraction, the phenomenon of lithium deposition does not occur in the battery unit, and thus a safety accident caused by the phenomenon of lithium deposition in the battery unit is effectively prevented.

In an optional embodiment, the through slot extends linearly in the axial direction of the winding needle sleeve; alternatively, the through slot extends helically about the central axis of the winding needle sleeve.

In the above-mentioned implementation process, the winding needle sleeve can be manufactured by means of an injection molding process, so that the through slot extends linearly along the axis of the winding needle sleeve, thereby ensuring the manufacturing efficiency of the winding needle sleeve and controlling the manufacturing cost of the winding needle sleeve; when the through slot is designed to extend helically about the central axis of the winding needle sleeve, the winding needle sleeve can well elastically support the electrode assembly, and when the electrode assembly expands and contracts to compress the winding needle sleeve, since the through slot extends helically about the central axis of the winding needle sleeve, the winding needle sleeve can well adapt to an acting force applied by the electrode assembly so as to deform helically about the central axis of the winding needle sleeve in the radial direction, thereby providing good elastic support for the electrode assembly.

In an optional embodiment, the wall of the winding needle sleeve is provided with a through hole for an electrolyte to pass.

In the above-mentioned implementation process, by forming the through hole in the wall of the winding needle sleeve, it is possible to further improve the efficiency of electrolyte injection and infiltration of the battery unit and to ensure the energy density of the battery unit. It should be noted that one or more through holes may be provided. When a plurality of through holes are provided, the plurality of through holes are arranged in the winding needle sleeve at intervals.

In an optional embodiment, the winding needle sleeve includes a first transmission portion, the first transmission portion being used for cooperating with a winding needle such that the winding needle can drive the winding needle sleeve to synchronously rotate.

In the above-mentioned implementation process, the electrode assembly of the battery unit is formed by winding an electrode plate and a separator stacked to each other around the winding needle sleeve by means of a winding device. By providing the first transmission portion on the winding needle sleeve, the first transmission portion is in transmission fit with the winding needle, so that the winding needle drives the winding needle sleeve to rotate synchronously, and the winding quality of the electrode assembly is ensured.

In an optional embodiment, the first transmission portion includes at least one recess, the recess extending from an end face of the winding needle sleeve in an axial direction of the winding needle sleeve.

In the above-mentioned implementation process, the first transmission portion is in transmission fit with the winding needle by means of at least one recess, thereby ensuring that the winding needle drives the winding needle sleeve to rotate synchronously and ensuring the winding quality of the electrode assembly; meanwhile, when the first transmission portion includes two or more recesses and the winding needle has protrusions corresponding to the recesses in number, it is possible to ensure the stability of the connection between the winding needle and the winding needle sleeve and to effectively transmit the winding power of the winding needle to the winding needle sleeve, preventing the winding needle and the winding needle sleeve from slipping in a rotation direction.

In an optional embodiment, a plurality of recesses are provided, and the plurality of recesses are distributed at intervals about the central axis of the winding needle sleeve.

In the above-mentioned implementation process, since a plurality of recesses are distributed at intervals about the central axis of the winding needle sleeve, the winding power transmitted by the winding needle to the winding needle sleeve can uniformly act on the winding needle sleeve to avoid damage to the winding needle sleeve caused by an excessive local stress, so that the winding needle sleeve is completely retained in the electrode assembly, and the elastic support of the winding needle sleeve for the electrode assembly is ensured.

In a second aspect, the present application provides a battery unit, including an electrode assembly and a winding needle sleeve in any one of the embodiments described above, the winding needle sleeve being provided in a central hole of the electrode assembly.

In the above-mentioned implementation process, the battery unit includes an electrode assembly and a winding needle sleeve provided in the central hole of the electrode assembly. When the electrode assembly expands and contracts due to the charging and discharging of the battery unit, the winding needle sleeve can effectively support the central hole of the electrode assembly, solving the problem of collapse caused by insufficient supporting strength of the winding needle sleeve for the central hole of the electrode assembly. Specifically, when the winding needle sleeve is compressed during the expansion and contraction of the electrode assembly, the winding needle sleeve restrains the deformation of the electrode assembly due to its elasticity and thus supports the electrode assembly all the time, so that the surface of the electrode assembly does not wrinkle due to the expansion and contraction, the phenomenon of lithium deposition does not occur in the battery unit, and thus a safety accident caused by the phenomenon of lithium deposition in the battery unit is effectively prevented.

In a third aspect, the present application provides a winding device, including a driving mechanism, a winding needle and a winding needle sleeve in any one of the embodiments described above, the driving mechanism being used for driving the winding needle to rotate, the winding needle sleeve being sleeved on the winding needle, and the winding needle sleeve being used for winding an electrode plate and a separator stacked to each other to form an electrode assembly.

In the above-mentioned implementation process, the electrode assembly having the winding needle sleeve can be manufactured by means of the winding device. The winding needle of the winding device is inserted into the winding needle sleeve, and the driving mechanism of the winding device can drive the winding needle sleeve to rotate while driving the winding needle to rotate.

In an optional embodiment, the winding needle includes a second transmission portion, the second transmission portion being used for cooperating with the winding needle sleeve such that the winding needle can drive the winding needle sleeve to synchronously rotate.

In the above-mentioned implementation process, by means of the second transmission portion on the winding needle, it is possible to allow the winding needle to be effectively in driving connection with the winding needle sleeve, so that the winding needle drives the winding needle sleeve to rotate synchronously, and the winding quality of the electrode assembly is ensured.

In an optional embodiment, the winding device further includes a compounding mechanism used for compounding a separator to the winding needle sleeve.

In the above-mentioned implementation process, the separator can be compounded on a circumferential surface of the winding needle sleeve by means of the compounding mechanism so as to ensure the winding quality of the electrode assembly.

### Brief Description of the Drawings

In order to more clearly describe the technical solutions of the embodiments of the present application, the accompanying drawings required in the embodiments will be described briefly below. It should be understood that the following accompanying drawings illustrate only some embodiments of the present application and therefore should not be construed as a limitation on the scope thereof. For those of ordinary skill in the art, other relevant accompanying drawings can also be obtained from these accompanying drawings without any creative effort.
Fig. 1 is a schematic diagram of a battery unit according to an embodiment of the present application;
Fig. 2 is a cross-sectional view of a battery unit according to an embodiment of the present application;
Fig. 3 is a front view of a winding needle sleeve according to an embodiment of the present application;
Fig. 4 is a top view of a winding needle sleeve according to an embodiment of the present application;
Fig. 5 is a cross-sectional view of a winding needle sleeve according to an embodiment of the present application;
Fig. 6 is an isometric diagram of a winding needle sleeve according to an embodiment of the present application;
Fig. 7 is a schematic diagram of a winding device provided in an embodiment of the present application;
Fig. 8 is a side view of a winding needle sleeve according to an embodiment of the present application;
Fig. 9 is a schematic diagram of a winding needle according to an embodiment of the present application;
Fig. 10 is a schematic diagram of an end face of a winding needle sleeve provided with three recesses according to an embodiment of the present application;
Fig. 11 is a cross-sectional view of the winding needle sleeve shown in Fig. 8;
Fig. 12 illustrates a schematic diagram of a winding needle that can be fitted with the winding needle sleeve shown in Fig. 8;
Fig. 13 is a cross-sectional view of the winding needle shown in Fig. 12;
Fig. 14 illustrates a schematic diagram of a winding needle that can be fitted with the winding needle sleeve shown in Fig. 10;
Fig. 15 is a cross-sectional view of the winding needle shown in Fig. 12;
Fig. 16 is a schematic diagram of an end face of a winding needle sleeve provided with one recess according to an embodiment of the present application;
Fig. 17 is a cross-sectional view of the winding needle sleeve shown in Fig. 16;
Fig. 18 illustrates a schematic diagram of a winding needle that can be fitted with the winding needle sleeve shown in Fig. 16;
Fig. 19 is a cross-sectional view of the winding needle shown in Fig. 18;
Fig. 20 illustrates a schematic diagram of a winding needle that can be fitted with the winding needle sleeve shown in Fig. 16;
Fig. 21 is a cross-sectional view of the winding needle shown in Fig. 20;
Fig. 22 is a schematic diagram of an end face of a winding needle sleeve provided with no recess according to an embodiment of the present application;
Fig. 23 is a cross-sectional view of the winding needle sleeve shown in Fig. 22;
Fig. 24 illustrates a schematic diagram of a winding needle with a detachable protrusion;
Fig. 25 is a cross-sectional view of the winding needle shown in Fig. 24;
Fig. 26 is a schematic diagram illustrating a recess in a first shape and a protrusion in a first shape according to an embodiment of the present application;
Fig. 27 is a schematic diagram illustrating a recess in a second shape and a protrusion in a second shape according to an embodiment of the present application;
Fig. 28 is a schematic diagram illustrating a recess in a third shape and a protrusion in a third shape according to an embodiment of the present application;
Fig. 29 is a schematic diagram illustrating a recess in a fourth shape and a protrusion in a fourth shape according to an embodiment of the present application;
Fig. 30 is a schematic diagram illustrating a recess in a fifth shape and a protrusion in a fifth shape according to an embodiment of the present application; and
Fig. 31 is a schematic diagram illustrating a recess in a sixth shape and a protrusion in a sixth shape according to an embodiment of the present application.

List of reference signs: 100 - Battery unit; 10 - Winding needle sleeve; 11 - Through slot; 12 - Through hole; 13 - First transmission portion; 130 - Recess; 131 - Guide groove; 1310 - Guide inclined surface; 20 - Electrode assembly; 21 - Electrode plate; 22 - Separator; 101 - Housing; 102 - End cap; 200 - Winding device; 30 - Winding needle; 31 - Second transmission portion; 310 - Protrusion; 311 - Inlaid ring; 40 - Compounding mechanism.

### Detailed Description of Embodiments

In order to make the objectives, technical solutions and advantages of the embodiments of the present application clearer, the technical solutions in the embodiments of the present application will be described clearly below with reference to the drawings in the embodiments of the present application. Obviously, the embodiments described are some of, rather than all of, the embodiments of the present application. All the other embodiments obtained by those of ordinary skill in the art based on the embodiments of the present application without any creative effort shall fall within the scope of protection of the present application.

Unless otherwise defined, all technical and scientific terms used in the present application have the same meanings as those commonly understood by those skilled in the art to which the present application belongs. The terms used in the description of the present application are merely for the purpose of describing specific embodiments, but are not intended to limit the present application. The terms "comprising/including", "provided with", and any variations thereof in the description and claims, as well as the brief description of the drawings described above of the present application are intended to cover non-exclusive inclusions.

In the present application, the phrase "embodiment" mentioned means that the specific features, structures, or characteristics described with reference to the embodiments may be encompassed in at least one embodiment of the present application. The phrase at various locations in the description does not necessarily refer to the same embodiment, or an independent or alternative embodiment exclusive of another embodiment. Those skilled in the art should understand, in explicit and implicit manners, that an embodiment described in the present application may be combined with another embodiment.

In the description of the present application, it should be noted that unless otherwise explicitly specified and defined, the term "connection" should be understood in a broad sense, for example, it may be a fixed connection, a detachable connection, or an integrated connection; and may be a direct connection, an indirect connection by means of an intermediate medium, or internal communication between two elements. For those of ordinary skill in the art, the specific meaning of the foregoing term in the present application may be understood according to specific circumstances.

"A plurality of' appearing in the present application means two or more (including two).

In the present application, a battery unit may include a lithium ion secondary battery, a lithium ion primary battery, a lithium-sulfur battery, or a sodium-lithium ion battery, etc., which will not be limited in the embodiments of the present application.

A battery mentioned in the embodiments of the present application refers to a single physical module including one or more battery units to provide a high voltage and capacity. For example, the battery mentioned in the present application may include a battery module, a battery pack, etc. The battery generally includes a case for enclosing one or more battery units. The case can prevent liquid or other foreign matters from affecting the charging or discharging of a battery unit.

The battery unit includes an electrode assembly and an electrolyte, the electrode assembly being composed of a positive electrode plate, a negative electrode plate and a separator. The battery unit operates mainly by relying on movements of metal ions between the positive electrode plate and the negative electrode plate. The positive electrode plate includes a positive electrode current collector and a positive electrode active material layer. A surface of the positive electrode current collector is coated with the positive electrode active material layer, the positive electrode current collector not coated with the positive electrode active material layer protrudes from the positive electrode current collector coated with the positive electrode active material layer, and the positive electrode current collector not coated with the positive electrode active material layer serves as a positive electrode tab. Taking a lithium ion battery as an example, the material of the positive electrode current collector may be aluminum, and the positive electrode active material may be lithium cobalt oxides, lithium iron phosphate, ternary lithium or lithium manganate, etc. The negative electrode plate includes a negative electrode current collector and a negative electrode active material layer. A surface of the negative electrode current collector is coated with the negative electrode active material layer, the positive electrode current collector not coated with the negative electrode active material layer protrudes from the positive electrode current collector coated with the negative electrode active material layer, and the positive electrode current collector not coated with the negative electrode active material layer serves as a negative electrode tab. The negative electrode current collector may be made of copper, and the negative electrode active material may be carbon, silicon, etc. In order to ensure that no fusing occurs when a large current passes, a plurality of positive electrode tabs are provided and are stacked together, and a plurality of negative electrode tabs are provided and are stacked together. The separator may be made of PP (polypropylene), PE (polyethylene), etc. In addition, the electrode assembly may be of a winding structure.

It should be understood that, a phenomenon of lithium deposition refers to that when lithium ions de-intercalated from a positive electrode during the charging of the battery unit cannot be intercalated into a negative electrode, the lithium ions can only deposit on the surface of the negative electrode, thereby forming a layer of gray matter.

In the related art, during the charging and discharging of the battery unit, an electrode assembly expands and contracts to compress a winding needle sleeve. If the winding needle sleeve has insufficient supporting strength for the electrode assembly, the electrode assembly may collapse, resulting in wrinkling of a surface of the electrode assembly and the phenomenon of lithium deposition, which not only reduces the safety performance of the battery unit and greatly shortens the cycling life, but also limits the quick charge capacity of the battery unit, and may cause catastrophic consequences such as combustion or explosion.

The inventors found that, since a current winding needle sleeve is a circular tube, the electrode assembly compresses the winding needle sleeve mainly in a radial direction during the expansion and contraction thereof. If the current winding needle sleeve can be improved to uniformly contract and expand in a radial direction when being compressed in the radial direction, it can adapt to a volume change during expansion and contraction of the electrode assembly, and the possibility of collapse of the electrode assembly can be reduced, and the safety performance of the battery unit can thus be improved.

On the basis of the above-mentioned solution, the present application provides a technical solution that a winding needle sleeve can uniformly contract and expand in a radial direction when being compressed in the radial direction, and can thus improve the safety performance of a battery unit. The technical solution of the present application will be described below with reference to the accompanying drawings.

It will be appreciated that the battery units can directly supply power to a power consuming device, or can be connected in parallel or series to form a battery, so as to supply power to various power consuming devices in the form of the battery.

It will be appreciated that the power consuming device described in the embodiments of the present application, using the battery units or applicable to the battery may be in various forms, for example, a mobile phone, a portable apparatus, a laptop, an electric motorcycle, an electric vehicle, a ship, a spacecraft, an electric toy, an electric tool, etc. For example, the spacecraft includes an airplane, a rocket, a space shuttle, a spaceship, etc. The electric toy includes a fixed or mobile electric toy, such as a game console, an electric vehicle toy, an electric ship toy, an electric airplane toy, etc. The electric tool includes an electric tool for metal cutting, an electric tool for grinding, an electric tool for assembling, an electric tool for railways, etc., such as an electric drill, an electric grinder, an electric wrench, an electric screwdriver, an electric hammer, an electric impact drill, a concrete vibrator, and an electric planer.

The battery units and the batteries described in the embodiments of the present application are not only applicable to the power consuming device described above, but also applicable to all power consuming devices using battery units and batteries. However, in order to make the description concise, all the following embodiments will be described with an electric vehicle as an example.

A battery, a controller and a motor are provided inside the vehicle, and for example, the battery may be provided at the bottom of the vehicle or at the front or rear of the vehicle. The vehicle may be an oil-fueled vehicle, a gas-powered vehicle, or a new energy vehicle. The new energy vehicle may be a battery electric vehicle, a hybrid electric vehicle, an extended-range electric vehicle, and the like.

In some embodiments of the present application, the battery may be configured for supplying power to the vehicle. For example, the battery may serve as a power source for operating the vehicle. The controller is used for controlling the battery to supply power to the motor, for example, for meeting the working power demand during startup, navigation and traveling of the vehicle.

In other embodiments, the battery may not only serve as a power source for operating the vehicle, but may also serve as a power source for driving the vehicle, instead of or partially instead of fuel or natural gas, to provide driving power for the vehicle.

The battery mentioned in the embodiments of the present application refers to a single physical module including one or more battery units to provide a high voltage and capacity. For example, the battery is composed of a plurality of battery units connected in series or in parallel.

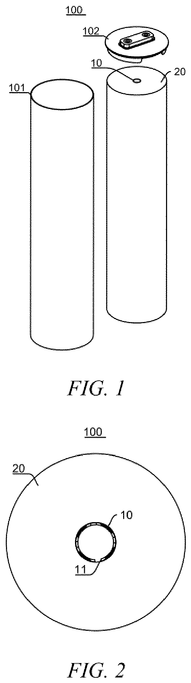

Referring to Figs. 1 and 2, Fig. 1 is a schematic diagram of a battery unit 100 according to an embodiment of the present application, and Fig. 2 is a cross-sectional view of the battery unit 100 according to an embodiment of the present application.

The battery unit 100 includes an electrode assembly 20, a winding needle sleeve 10, a housing 101, and an end cap 102. The winding needle sleeve 10 is provided in a central hole of the electrode assembly 20. The winding needle sleeve 10 is located in the central hole of the electrode assembly 20 to elastically support the electrode assembly 20. The interior of the housing 101 forms an accommodating cavity for receiving the electrode assembly 20 and an electrolyte, and the end cap 102 closes an opening of the housing 101 to close the electrode assembly 20 in the accommodating cavity.

When the electrode assembly 20 expands and contracts due to the charging and discharging of the battery unit 100, an acting force applied by the electrode assembly 20 to the winding needle sleeve 10 in a radial direction will cause the winding needle sleeve 10 to deform adaptively in the radial direction and to elastically support the electrode assembly 20 all the time, so that the electrode assembly 20 will not collapse, the phenomenon of lithium deposition of the battery unit 100 due to the wrinkling of the surface of the electrode assembly 20 is avoided, and the safe use of the battery unit 100 is effectively ensured.

How the winding needle sleeve 10 elastically supports the electrode assembly 20 will be described below.

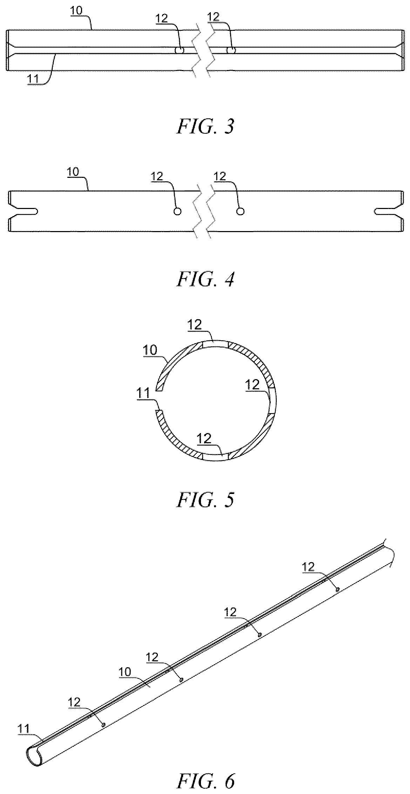

Referring to Fig. 3, Fig. 3 is a front view of the winding needle sleeve 10 according to an embodiment of the present application.

A wall of the winding needle sleeve 10 is provided with a through slot 11 extending through the wall, and the through slot 11 extends from one end to the other end of the winding needle sleeve 10 so as to allow expansion or contraction of the winding needle sleeve 10 in the radial direction.

In the above-mentioned implementation process, the through slot 11 allows the expansion or contraction of the winding needle sleeve 10 in the radial direction, so the winding needle sleeve 10 has the characteristic of elastic deformation in the radial direction, and a clearance formed by the through slot 11 can be indirectly construed as the deformation quantity of the winding needle sleeve 10 in the radial direction. When retained in the central hole of the electrode assembly 20, the winding needle sleeve 10 is elastically fitted with the electrode assembly 20 to elastically support the electrode assembly 20. When the electrode assembly 20 expands and contracts due to the charging and discharging of the battery unit 100, the acting force applied by the electrode assembly 20 to the winding needle sleeve 10 in the radial direction will cause the winding needle sleeve 10 to deform adaptively in the radial direction and to effectively support the center of the electrode assembly 20. Specifically, when the winding needle sleeve 10 is compressed during the expansion and contraction of the electrode assembly 20, the winding needle sleeve 10 correspondingly deforms due to its elasticity to restrain the deformation of the electrode assembly 20 and thus supports the central hole of the electrode assembly 20 all the time, so that the surface of the electrode assembly 20 does not wrinkle due to the expansion and contraction, the phenomenon of lithium deposition does not occur in the battery unit 100, and thus a safety accident caused by the phenomenon of lithium deposition in the battery unit 100 is effectively prevented.

Meanwhile, it should be noted that the electrolyte will be injected into the electrode assembly 20 during the manufacturing of the battery unit 100. The electrolyte is a carrier for ion transport in the battery. The electrolyte serves to conduct ions between a positive electrode and a negative electrode of the battery. The winding needle sleeve 10 is in direct contact with the electrode assembly 20, and the through slot 11 in the winding needle sleeve 10 can allow communication between the interior of the winding needle sleeve 10 and the electrode assembly 20, thus providing a passage for electrolyte injection and infiltration, effectively improving the effect of electrolyte injection and infiltration, and improving the energy density of the battery unit 100. Meanwhile, it will be appreciated that the winding needle sleeve 10 may be made of an insulating material or provided with an insulating material on the surface thereof in order to reduce the possibility that the winding needle sleeve 10 causes short circuiting between the electrode assembly 20 and other components.

As shown in Fig. 3, in some embodiments of the present application, the through slot 11 extends linearly in the axial direction of the winding needle sleeve 10, that is to say, when the winding needle sleeve 10 is unfolded towards two sides along the through slot 11 in a direction perpendicular to an extending direction of the through slot 11 such that the winding needle sleeve 10 is planar, the unfolded shape of the winding needle sleeve 10 is rectangular.

The winding needle sleeve 10 may be manufactured by a simple manufacturing process, such as injection molding, such that the through slot 11 extends linearly along the axis of the winding needle sleeve 10, thereby ensuring the manufacturing efficiency of the winding needle sleeve 10 and controlling the manufacturing cost of the winding needle sleeve 10.

In other embodiments, the linear through slot 11 may extend inclining to the axial direction of the winding needle sleeve 10, that is to say, when the winding needle sleeve 10 is unfolded towards the two sides along the through slot 11 in the direction perpendicular to the extending direction of the through slot 11 such that the winding needle sleeve 10 is planar, the unfolded shape of the winding needle sleeve 10 is a parallelogram in which every two adjacent sides are arranged inclining to each other.

In some other embodiments of the present application, the through slot 11 extends helically about the central axis of the winding needle sleeve 10. That is to say, the winding needle sleeve 10 can be regarded as a strip that is helically wound with the central axis of the winding needle sleeve 10 as the rotation axis in the extending direction of the central axis of the winding needle sleeve 10.

When the through slot 11 is designed to extend helically about the central axis of the winding needle sleeve 10, the winding needle sleeve 10 can well elastically support the electrode assembly 20, and when the electrode assembly 20 expands and contracts to compress the winding needle sleeve 10, since the through slot 11 extends helically about the central axis of the winding needle sleeve 10, the winding needle sleeve 10 can well adapt to the acting force applied by the electrode assembly 20 and deform helically about the central axis of the winding needle sleeve 10 in the radial direction, thereby providing good elastic support for the electrode assembly 20. Also, since the through slot 11 is in a helical shape, the interior of the winding needle sleeve 10 and the electrode assembly 20 have a large conductive area, so that the effect of electrolyte injection and infiltration is effectively improved, and the energy density of the battery unit 100 is improved.

Referring to Figs. 4 to 6, Fig. 4 is a top view of the winding needle sleeve 10 according to an embodiment of the present application, Fig. 5 is a cross-sectional view of the winding needle sleeve 10 according to an embodiment of the present application, and Fig. 6 is an isometric diagram of the winding needle sleeve 10 according to an embodiment of the present application.

The wall of the winding needle sleeve 10 is provided with a through hole 12 for the electrolyte to pass. The through hole 12 can effectively allow the communication between the interior of the winding needle sleeve 10 and the electrode assembly 20.

By forming the through hole 12 in the wall of the winding needle sleeve 10, it is possible to further improve the efficiency of electrolyte injection and infiltration of the battery unit 100 and to ensure the energy density of the battery unit 100.

It should be noted that one or more through holes 12 may be provided. When a plurality of through holes 12 are provided, the plurality of through holes 12 are arranged in the winding needle sleeve 10 at intervals.

It should be noted that in the embodiment of the present application, a plurality of through holes 12 are formed in both the axial direction and the radial direction of the winding needle sleeve 10. Referring to Figs. 4 and 6, the plurality of through holes 12 in the same straight line are defined as a column of through holes 12 in the axial direction of the winding needle sleeve 10 in units of columns. Referring to Fig. 5, the winding needle sleeve 10 has three columns of through holes 12, and the three columns of through holes 12 are uniformly arranged at intervals with the central axis of the winding needle sleeve 10 as a baseline.

In the above-mentioned implementation process, by arranging a plurality of through holes 12, the efficiency of electrolyte injection and infiltration of the battery unit 100 can be effectively improved, and the energy density of the battery unit 100 can be ensured; also, the three columns of through holes 12 are designed to be uniformly arranged at intervals with the central axis of the winding needle sleeve 10 as the baseline, so that the winding needle sleeve 10 is uniformly stressed when being compressed by the electrode assembly 20, and the elastic support of the winding needle sleeve 10 for the electrode assembly 20 is ensured.

In the above-mentioned solution, the winding needle sleeve 10 of the battery unit 100 can not only improve the safety performance and energy density of the battery unit 100, but also reduce the assembly accuracy of a winding needle and the winding needle sleeve 10 during the winding of the electrode assembly 20, improve the winding quality of the electrode assembly 20, and enable the electrode assembly 20 to have good straightness of the winding axis. A winding device will be described below.

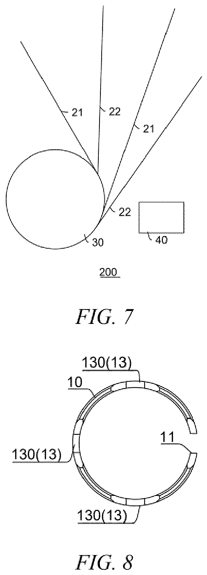

Referring to Fig. 7, Fig. 7 is a schematic diagram of a winding device 200 provided in an embodiment of the present application. The winding device 200 includes a driving mechanism (not shown in the figures), a winding needle 30 and the above-described winding needle sleeve 10 (not shown in Fig. 6). The driving mechanism is used for driving the winding needle 30 to rotate, the winding needle sleeve 10 is sleeved on the winding needle 30, and the winding needle sleeve 10 is used for winding an electrode plate 21 and a separator 22 stacked to each other to form the electrode assembly 20.

The winding needle sleeve 10 is provided with a through slot 11 and therefore has elasticity in the radial direction. On the one hand, when the winding needle sleeve 10 or the winding needle 30 has a relatively coarse assembling accuracy, the elasticity of the winding needle sleeve 10 allows the winding needle 30 to be smoothly inserted into the winding needle sleeve 10 so as to drive the winding needle sleeve 10 to rotate, so that the manufacturing cost of the winding needle sleeve 10 and the winding needle 30 can be effectively reduced. On the other hand, since a fitting clearance between an inner wall of the winding needle sleeve 10 and an outer surface of the winding needle 30 is relatively small, the run-out and bending phenomena of the winding needle sleeve 10 during rotation can also be alleviated, so that the electrode assembly 20 has good straightness of the winding axis, and the winding quality of the electrode assembly 20 is improved.

It will be appreciated that the winding needle 30 may be made of a material having the characteristics of high rigidity and wear resistance, such as tungsten steel, alloy steel, etc. to ensure that the winding needle 30 stably and effectively drives the winding needle sleeve 10 to rotate.

It will be appreciated that in some embodiments of the present application, as shown in Fig. 7, the winding device 200 further includes a compounding mechanism 40 for compounding the separator 22 to the winding needle sleeve 10. The compounding mechanism 40 includes, but is not limited to, a glue spreader, a blanching mechanism, a rolling mechanism, or a latch needle mechanism. The head of the separator 22 can be glued, blanched, rolled, or wound onto the winding needle sleeve 10 by means of the compounding mechanism 40 prior to winding. The driving mechanism of the winding device 200 is operated, the winding needle sleeve 10 rotates to wind the electrode plate 21 and the separator 22 stacked to each other around the winding needle sleeve 10, and after the winding is completed, the winding needle 30 is pulled out from the winding needle sleeve 10.

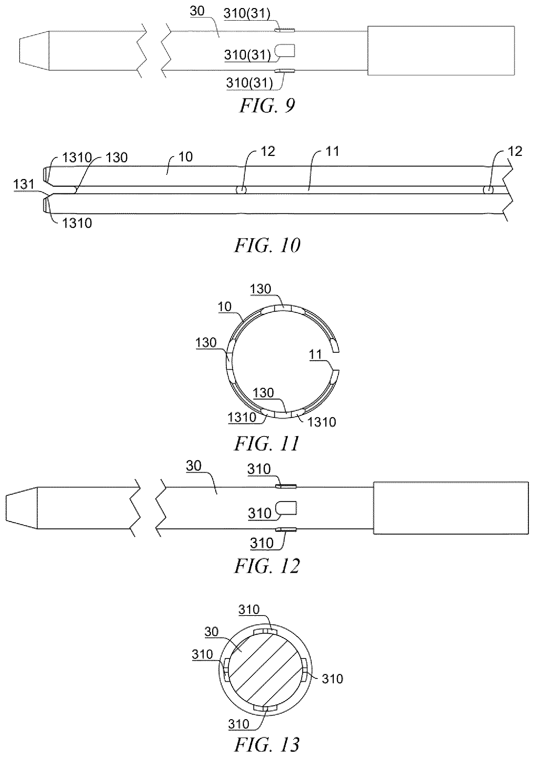

Referring to Figs. 8 and 9, Fig. 8 is a side view of the winding needle sleeve 10 according to an embodiment of the present application, and Fig. 9 is a schematic diagram of the winding needle 30 according to an embodiment of the present application.

The winding needle sleeve 10 includes a first transmission portion 13. The winding needle 30 includes a second transmission portion 31. The first transmission portion 13 of the winding needle sleeve 10 cooperates with the second transmission portion 31 of the winding needle 30, such that the winding needle 30 can drive the winding needle sleeve 10 to rotate synchronously.

Since the first transmission portion 13 and the second transmission portion 31 cooperate with each other, it is possible to ensure that the winding needle 30 drives the winding needle sleeve 10 to rotate synchronously, thereby ensuring the winding efficiency of the winding needle 30 device and the winding quality of the electrode assembly 20.

In some embodiments of the present application, the first transmission portion 13 includes at least one recess 130, the recess 130 extending from an end face of the winding needle sleeve 10 in the axial direction of the winding needle sleeve 10. Accordingly, the second transmission portion 31 may include a protrusion 310, the protrusion 310 being embeddable in the recess 130 to achieve synchronous transmission of the winding needle sleeve 10.

The first transmission portion 13 is in transmission fit with the winding needle 30 by means of at least one recess 130, thereby ensuring that the winding needle 30 drives the winding needle sleeve 10 to rotate synchronously and ensuring the winding quality of the electrode assembly 20; meanwhile, when the first transmission portion 13 includes two or more recesses 130 and the winding needle 30 has protrusions 310 corresponding to the recesses 130 in number, it is possible to ensure the stability of the connection between the winding needle 30 and the winding needle sleeve 10 and to effectively transmit the winding power of the winding needle 30 to the winding needle sleeve 10, preventing the winding needle 30 and the winding needle sleeve 10 from slipping in a rotation direction. In other words, when the first transmission portion 13 includes two or more recesses 130, the number of protrusions on the winding needle 30 is not limited, and the driving of the winding needle 30 to the winding needle sleeve 10 can be ensured by providing at least one protrusion for engagement with any one of the recesses 130.

In some embodiments of the present application, referring to Figs. 10 and 11, Fig. 10 is a schematic diagram of an end face of a winding needle sleeve 10 provided with three recesses 130 according to an embodiment of the present application, and Fig. 11 is a cross-sectional view of the winding needle sleeve 10 shown in Fig. 10. It can be seen from Figs. 10 and 11 that on the end face of the winding needle sleeve 10, three recesses 130 and the through slot 11 are uniformly arranged at intervals with the central axis of the winding needle sleeve 10 as the baseline, so as to ensure the structural stability of the winding needle sleeve 10, and meanwhile, when the winding needle 30 has a corresponding number of protrusions 310 so as to correspond to the recesses 130 one by one, it can be ensured that the winding needle 30 stably drives the winding needle sleeve 10 to rotate synchronously.

Referring to Figs. 12 and 13, Fig. 12 illustrates a schematic diagram of a winding needle 30 that can be fitted with the winding needle sleeve 10 shown in Fig. 10, and Fig. 13 is a cross-sectional view of the winding needle 30 shown in Fig. 12. The winding needle 30 is provided with four protrusions 310, the four protrusions 310 are uniformly arranged at intervals with the central axis of the winding needle 30 as the baseline, and the four protrusions 310 can be respectively embedded into the three recesses 130 and the through slot 11 so as to smoothly drive the winding needle sleeve 10 to rotate synchronously.

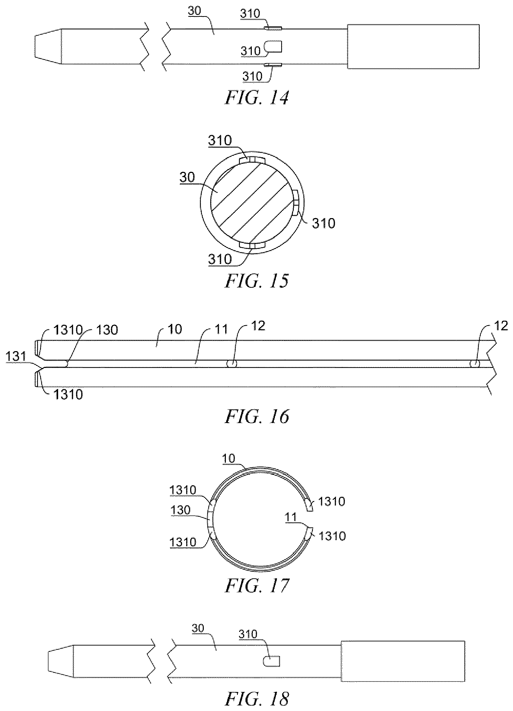

Referring to Figs. 14 and 15, Fig. 14 illustrates a schematic diagram of a winding needle 30 that can be fitted with the winding needle sleeve 10 shown in Fig. 10, and Fig. 15 is a cross-sectional view of the winding needle 30 shown in Fig. 12. The winding needle 30 is provided with three protrusions 310, and the three protrusions 310 correspond to the three recesses 130 one by one, so that each protrusion 310 is embedded into the corresponding recess 130 so as to smoothly drive the winding needle sleeve 10 to rotate synchronously.

In some embodiments of the present application, referring to Figs. 16 and 17, Fig. 16 is a schematic diagram of an end face of a winding needle sleeve 10 provided with one recess 130 according to an embodiment of the present application, and Fig. 17 is a cross-sectional view of the winding needle sleeve 10 shown in Fig. 16. It can be seen from Figs. 16 and 17 that an end face of the winding needle sleeve 10 is provided with a recess 130. On the end face of the winding needle sleeve 10, the recess 130 and the through slot 11 are uniformly arranged at an interval with the central axis of the winding needle sleeve 10 as the baseline.

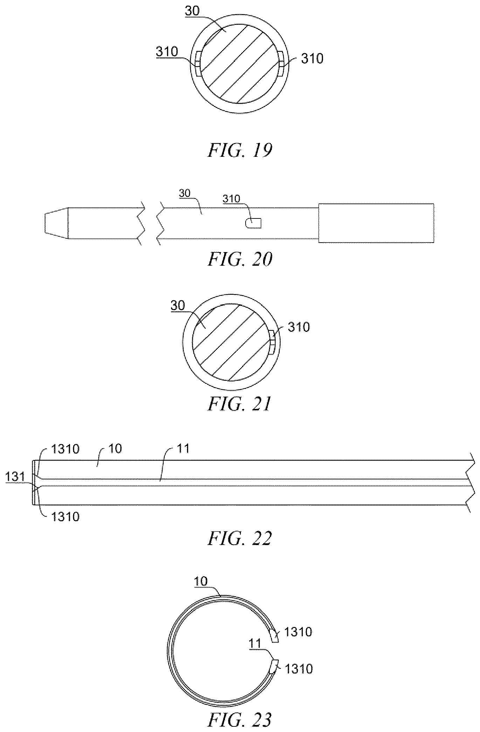

Referring to Figs. 18 and 19, Fig. 18 illustrates a schematic diagram of a winding needle 30 that can be fitted with the winding needle sleeve 10 shown in Fig. 16, and Fig. 19 is a cross-sectional view of the winding needle 30 shown in Fig. 18. The winding needle 30 is provided with two protrusions 310, the two protrusions 310 are uniformly arranged at an interval with the central axis of the winding needle 30 as the baseline, and the two protrusions 310 can be respectively embedded into the recess 130 and the through slot 11 so as to smoothly drive the winding needle sleeve 10 to rotate synchronously.

Referring to Figs. 20 and 21, Fig. 20 illustrates a schematic diagram of a winding needle 30 that can be fitted with the winding needle sleeve 10 shown in Fig. 16, and Fig. 21 is a cross-sectional view of the winding needle 30 shown in Fig. 20. The winding needle 30 is provided with a protrusion 310, and the protrusion 310 can be embedded into the recess 130 to smoothly drive the winding needle sleeve 10 to rotate synchronously.

In some embodiments of the present application, referring to Figs. 22 and 23, Fig. 22 is a schematic diagram of an end face of a winding needle sleeve 10 provided with no recess 130 according to an embodiment of the present application, and Fig. 23 is a cross-sectional view of the winding needle sleeve 10 shown in Fig. 22.

The winding needle sleeve 10 may be provided with no recess 130, the first transmission portion 13 may include a through slot 11, the protrusion 310 on the winding needle 30 may be embedded in the through slot 11, and it is similarly possible to achieve that the winding needle 30 drives the winding needle sleeve 10 to move synchronously. Meanwhile, if the winding needle sleeve 10 is provided with no recess 130, the manufacturing difficulty and the manufacturing cost of the winding needle sleeve 10 can be reduced. The winding needle 30 shown in Fig. 18 can be fitted with the winding needle sleeve 10 shown in Fig. 20, a protrusion 310 provided on the winding needle 30 can be embedded into the through slot 11, and it is similarly possible to drive the winding needle sleeve 10 to rotate synchronously.

It should be noted that, based on the embodiments shown in Figs. 10 to 23, the protrusion(s) 310 of the winding needle 30 may be embedded into the recess(es) 130 and the through slot 11, or may also be embedded into only one of the recess(es) 130 and the through slot 11.

In the above-described solution, the recess 130 may extend to the end face of the winding needle sleeve 10 through a guide groove 131, the guide groove 131 has two opposite guide inclined surfaces 1310, and the two guide inclined surfaces 1310 are close to each other in a direction from the guide groove 131 to the recess 130, such that the protrusion 310 on the winding needle 30 can be smoothly embedded into the recess 130 along any one of the guide inclined surfaces 1310 when the winding needle 30 is inserted into the winding needle sleeve 10. Similarly, when the protrusion 310 on the winding needle 30 can be in transmission fit with the through slot 11, an end portion of the through slot 11 may be similarly provided with the guide groove 131, such that the protrusion 310 on the winding needle 30 can be smoothly embedded into the through slot 11 along any one of the guide inclined surfaces 1310.

In some embodiments of the present application, the protrusion 310 may be detachably connected to the winding needle 30 by means of an intermediate member. The protrusion 310 is designed to be detachably connected to the winding needle 30, so that the protrusion 310 can be replaced or maintained in a timely manner to ensure that the winding needle 30 smoothly drives the winding needle sleeve 10 to rotate.

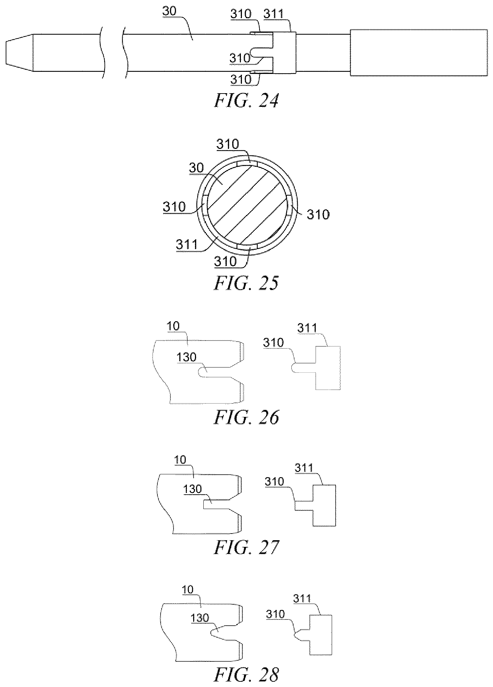

Referring to Fig. 24, Fig. 24 illustrates a schematic diagram of a winding needle 30 with a detachable protrusion 310, and Fig. 25 is a cross-sectional view of the winding needle 30 shown in Fig. 24.

The intermediate member includes an inlaid ring 311, the inlaid ring 311 being arranged coaxially with the winding needle 30 and the inlaid ring 311 being slidably sleeved on the winding needle 30. The protrusion 310 is formed on an end face of the inlaid ring 311 and extends in the axial direction of the winding needle 30.

It should be noted that the inlaid ring 311 may be formed with a corresponding number of protrusions 310 corresponding to different numbers of recesses 130 in the winding needle sleeve 10. For example, the inlaid ring 311 may be formed with one, two, three, four or another number of protrusions 310.

It should be noted that the embodiments of the present application do not limit the shapes of the recesses 130 and the protrusions 310, as long as the transmission fit between the recesses 130 and the protrusions 310 can be achieved, and the winding needle 30 smoothly driving the winding needle sleeve 10 to rotate can be ensured.

Illustratively, referring to Fig. 26, Fig. 26 is a schematic diagram illustrating the recess 130 in a first shape and the protrusion in a first shape on the inlaid ring 311 according to an embodiment of the present application. In Fig. 26, the recess 130 is in a round-headed parallel shape, i.e., the tail end of the recess 130 is in a semi-circular shape, and two opposite wall surfaces of the recess 130 are parallel to each other. The protrusion 310 is also in a round-headed parallel shape, i.e., the end of the protrusion 310 is in a semi-circular shape, and two opposite surfaces of the protrusion 310 are parallel to each other so as to be engaged with the recess 130.

Illustratively, referring to Fig. 27, Fig. 27 is a schematic diagram illustrating the recess 130 in a second shape and the protrusion in a second shape on the inlaid ring 311 according to an embodiment of the present application. In Fig. 27, the recess 130 is in a square shape. The protrusion 310 is also in a square shape so as to be engaged with the recess 130.

Illustratively, referring to Fig. 28, Fig. 28 is a schematic diagram illustrating the recess 130 in a third shape and the protrusion in a third shape on the inlaid ring 311 according to an embodiment of the present application. In Fig. 28, the recess 130 is in a triangular arc-ended shape, i.e., the tail end of the recess 130 is in an arc shape, and two opposite wall surfaces of the recess 130 are inclined to each other and are transitionally connected by means of the tail end of the recess 130. The protrusion 310 is similarly in a triangular arc-ended shape, i.e., the end of the protrusion 310 is in an arc shape, and two opposite surfaces of the protrusion 310 are inclined to each other and are transitionally connected by means of the end of the protrusion 310 so as to be engaged with the recess 130.

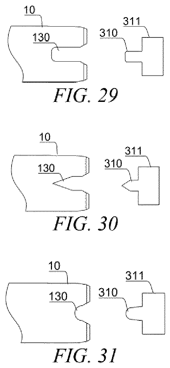

Illustratively, referring to Fig. 29, Fig. 29 is a schematic diagram illustrating the recess 130 in a fourth shape and the protrusion in a fourth shape on the inlaid ring 311 according to an embodiment of the present application. In Fig. 29, the recess 130 is in an arc-headed parallel shape, i.e., the tail end of the recess 130 is in an arc shape, and two opposite wall surfaces of the recess 130 are parallel to each other. The protrusion 310 is also in an arc-headed parallel shape, i.e., the end of the protrusion 310 is in an arc shape, and two opposite surfaces of the protrusion 310 are parallel to each other so as to be engaged with the recess 130.

Illustratively, referring to Fig. 30, Fig. 30 is a schematic diagram illustrating the recess 130 in a fifth shape and the protrusion in a fifth shape on the inlaid ring 311 according to an embodiment of the present application. In Fig. 30, the recess 130 is in a triangular tip-ended shape, i.e., two opposite wall surfaces of the recess 130 are inclined to each other and extend to the tail end of the recess 130. The protrusion 310 is similarly in a triangular tip-ended shape, i.e., two opposite surfaces of the protrusion 310 are inclined to each other and extend to the end of the protrusion 310 so as to be engaged with the recess 130.

Illustratively, referring to Fig. 31, Fig. 31 is a schematic diagram illustrating the recess 130 in a sixth shape and the protrusion in a sixth shape on the inlaid ring 311 according to an embodiment of the present application. In Fig. 31, the recess 130 is in a semicircular shape. The end of the protrusion 310 is similarly in a semicircular shape so as to be engaged with the recess 130.

The foregoing descriptions are merely preferred embodiments of the present application, and are not intended to limit the present application. For those skilled in the art, various modifications and variations may be made to the present application. Any modifications, equivalent substitutions, improvements, and the like made within the spirit and principle of the present application should fall within the scope of protection of the present application.

## Claims

1. A winding needle sleeve, a wall of the winding needle sleeve being provided with a through slot extending through the wall, and the through slot extending from one end to the other end of the winding needle sleeve so as to allow expansion or contraction of the winding needle sleeve in a radial direction.

2. The winding needle sleeve according to claim 1, wherein the through slot extends linearly in an axial direction of the winding needle sleeve;
or, the through slot extends helically about the central axis of the winding needle sleeve.

3. The winding needle sleeve according to claim 1 or 2, wherein the wall of the winding needle sleeve is provided with a through hole for an electrolyte to pass.

4. The winding needle sleeve according to any one of claims 1-3, wherein the winding needle sleeve comprises a first transmission portion, the first transmission portion being used for cooperating with a winding needle such that the winding needle can drive the winding needle sleeve to synchronously rotate.

5. The winding needle sleeve according to claim 4, wherein the first transmission portion comprises at least one recess, the recess extending from an end face of the winding needle sleeve in an axial direction of the winding needle sleeve.

6. The winding needle sleeve according to claim 5, wherein a plurality of recesses are provided, and the plurality of recesses are distributed at intervals about the central axis of the winding needle sleeve.

7. A battery unit, comprising an electrode assembly and a winding needle sleeve according to any one of claims 1-6, the winding needle sleeve being provided in a central hole of the electrode assembly.

8. A battery, comprising a battery unit according to claim 7.

9. A power consuming device, comprising a battery according to claim 8, the battery being used for supplying power.

10. A winding device, comprising a driving mechanism, a winding needle and a winding needle sleeve according to any one of claims 1-6, the driving mechanism being used for driving the winding needle to rotate, the winding needle sleeve being sleeved on the winding needle, and the winding needle sleeve being used for winding an electrode plate and a separator stacked to each other to form an electrode assembly.

11. The winding device according to claim 10, wherein the winding needle comprises a second transmission portion, the second transmission portion being used for cooperating with the winding needle sleeve such that the winding needle can drive the winding needle sleeve to synchronously rotate.

12. The winding device according to claim 10 or 11,
further comprising a compounding mechanism used for compounding the separator to the winding needle sleeve.
